# FASCICULE DE BREVET EUROPEEN

(11) **EP 2 398 334 B1**
(45) Date de publication et mention de la délivrance du brevet: **31.05.2017**
(21) Numéro de dépôt: 10708314.9
(22) Date de dépôt: 09.02.2010
(51) Int. Cl.: A23B 7/055, A23L 3/365, B01F 15/06, C12G 1/02, F25D 3/10, B01F 5/04, B01F 3/04

(54) **PROCEDE DE TRAITEMENT EN LIGNE DE MILIEUX LIQUIDES OU PATEUX OU SEMI-LIQUIDES TELS QUE LES VENDANGES**
VERFAHREN ZUM INLINE-VERARBEITEN VON FLÜSSIGEN ODER PASTENARTIGEN ODER HALBFLÜSSIGEN MEDIEN WIE TRAUBENERNTEN
METHOD FOR THE IN-LINE PROCESSING OF LIQUID OR PASTY OR SEMI-LIQUID MEDIA SUCH AS GRAPE HARVESTS

(30) Priorité: 17.02.2009 FR 0951009
(43) Date de publication de la demande: 28.12.2011
(73) Titulaire: L'Air Liquide Société Anonyme pour l'Etude et l'Exploitation des Procédés Georges Claude, 75007 Paris (FR)
(72) Inventeur: ALGOET, Jo, B-8953 Wijtschate (BE); BRAS, Dominique, F-93290 Tremblay En France (FR); CAZORLA, Patrick, F-13780 Cuges les Pins (FR); KEMPEN, Carinne, F-78220 Viroflay (FR)
(74) Mandataire: Mellul-Bendelac, Sylvie Lisette
(86) Numéro de dépôt international: PCT/FR2010/050214
(87) Numéro de publication internationale: WO 2010/094874

(56) Documents cités:
- EP-A- 0 542 055
- WO-A-2004/037966
- WO-A-2005/053440
- FR-A- 2 449 256
- FR-A- 2 903 482
- US-A- 4 428 535

## Description

La présente invention concerne le domaine du traitement, par exemple du refroidissement, de l'inertage, de la carbonatation ou encore des réactions chimiques acide-base de milieux, notamment dans l'industrie alimentaire, traitements ayant lieu en ligne, dans des canalisations (qu'il s'agisse de milieux liquides ou semi-liquides ou pâteux ou encore comportant des éléments solides dans une base liquide), à titre d'exemple elle s'intéresse en particulier au refroidissement de vendanges (raisins entiers ou écrasés intervenant au niveau de la canalisation reliant l'étape de récolte au pressoir, mais elle s'applique également avec beaucoup d'avantages à d'autres milieux à refroidir tels que des milieux laitiers, ou encore pour le traitement d'eaux usées.

Examinons plus en détail dans ce qui suit l'exemple du refroidissement de vendanges.

Les utilisateurs cherchent à réaliser un refroidissement des raisins entiers ou écrasés par une méthode rapide, harmonieuse et non mécanique, afin d'augmenter le potentiel d'obtention de vins de qualité :
- ceci en éliminant ou réduisant considérablement les phénomènes de trituration sur le fruit et le moût ;
- on cherche à disposer de raisins à basse température, afin, dès le début de la vinification, de maîtriser le démarrage de la fermentation ou de réaliser des macérations à basse température avant la fermentation ;
- on sait par ailleurs que des fermentations réalisées à plus basse température donnent lieu à un vin plus clair et plus aromatique et par ailleurs permettre de réduire la quantité des SO₂ utilisée ;
- l'utilisation de fluides cryogéniques inertes pour réaliser cet abaissement de température permet de protéger le milieu contre une possible oxydation, dont les conséquences négatives sont bien connues par ailleurs.

La littérature fait état de certains procédés et dispositifs réalisant un tel refroidissement, parmi lesquels on peut citer les références suivantes :
- le document WO2004/03 7966, qui décrit l'injection en ligne de CO₂ liquide dans la canalisation reliant le conteneur récepteur de vendange et le pressoir, mais ce document met en oeuvre une buse simple d'injection dans la canalisation, qui selon les expérimentations de la Demanderesse ne permet pas d'éviter les « coups de bélier » (surpressions brutales) dans le milieu traité (ce que selon la présente invention on souhaite éviter), il faut également mentionner que de telles buses simples réalisent une répartition très imparfaite du fluide cryogénique dans la veine de vendange transportée. On peut signaler d'autre part qu'une telle buse simple permet difficilement de dépasser un abaissement de température de 5°C pour un débit de produit de 70 à 80 tonnes/h.
- on peut aussi citer un autre type de système, illustré par le document WO 2005/05 3440, qui utilise un système de traitement de type « batch » (« lot »), qui est certes extrêmement intéressant et performant mais aussi plus complexe, plus lourd, et plus difficile à mettre en place sur une installation existante.

On l'aura compris à la lumière de ce qui précède, on recherche selon la présente invention un système de traitement en ligne, aisément adaptable à une installation existante, permettant :
- grâce à une telle injection directe de refroidir le produit, et notamment la vendange de 5 à 10 °C par rapport à sa température initiale ;
- de permettre de traiter un débit de vendange typiquement, de 80 tonnes/heure ;
- d'obtenir une bonne homogénéité de la température dans la veine ;
- de respecter le produit traité en évitant notamment toute forme de « trituration » des raisins ;
- de pouvoir aisément mettre en oeuvre ou non l'injection selon les besoins.

L'invention concerne alors un procédé de traitement en ligne, de milieux liquides ou pâteux ou semi-liquides ou encore comportant des éléments solides dans une base liquide, dans un canalisation transportant le milieu entre deux étapes d'une installation, par injection directe dans la canalisation d'un fluide cryogénique, se caractérisant en ce que l'on utilise pour réaliser l'injection dans la canalisation, un dispositif d'injection comprenant un corps cylindrique creux dans lequel est inséré une soupape forcée par un ressort, ledit dispositif d'injection comprenant au moins un canal traversant sensiblement parallèle à ladite soupape destiné à être alimenté en fluide cryogénique sous pression, une extrémité dudit canal traversant étant reliée au système d'alimentation en fluide cryogénique et l'extrémité opposée débouchant au niveau du siège de la soupape.

Les avantages de la solution proposée peuvent être résumés ainsi:
- l'injecteur peut être intégré sur une portion de canalisation spécifique, choisie et indépendante, par exemple entre deux brides, pour une mise en place facilitée ;
- l'injecteur peut être positionné de telle sorte que le fluide cryogénique soit injecté dans l'axe de la canalisation (dans l'axe du mouvement du produit à traiter dans la canalisation) ;
- les expérimentations réalisées par la Demanderesse à l'aide d'un tel injecteur, en ligne, ont démontré un échange thermique élevé entre le produit et le fluide cryogénique, une diffusion du fluide cryogénique mieux répartie par rapport à ce que l'on peut observer avec une buse simple, menant ainsi à une meilleure homogénéisation de la température du produit ;
- le temps de réponse du système est court, permettant ainsi de s'adapter très facilement à des températures d'entrées et/ou des débits de produit variables ;
- l'injection de fluide cryogénique peut être parfaitement contrôlée, par exemple via l'utilisation d'une vanne proportionnelle, l'ouverture/fermeture de la vanne proportionnelle dépendant de la différence entre la température de consigne et la température mesurée dans une partie aval de la canalisation par exemple ;
- le refroidissement est effectué sous pression et en continu, il permet de s'assurer de l'absence de « coups de bélier » dans la canalisation et donc d'altération du produit.

On peut penser, sans être lié bien entendu par cette explication, que ce bon résultat est lié à la diffusion annulaire du CO₂ obtenue grâce à l'injecteur utilisé, donnant lieu à une surface spécifique de contact vendange-C0₂ plus importante, mais peut être également au fait qu'une injection dans l'axe limite le dégazage localement pour le favoriser plus progressivement dans l'écoulement.
- les résultats observés dans le cas de la vendange montrent par ailleurs l'obtention de jus clairs, non troublés, ce qui est le signe d'une très bonne maîtrise des phénomènes d'oxydation.

L'invention va maintenant être exposée de façon plus détaillée à l'aide d'un exemple pratique, illustré avec les dessins, sur lesquels :

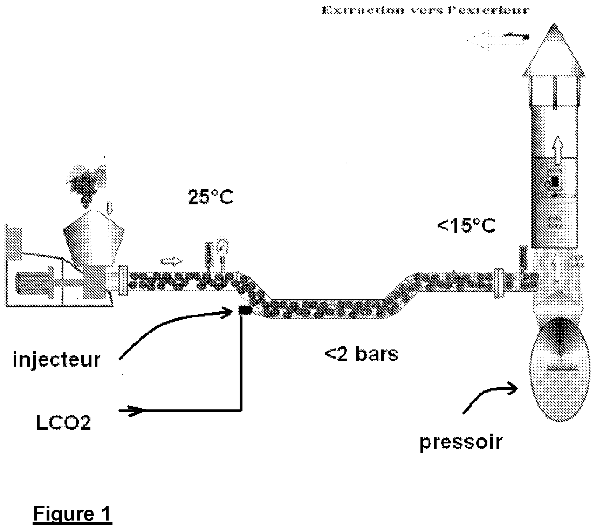

- la Figure 1 est une représentation schématique partielle d'une canalisation reliant l'érafloir au pressoir dans une installation de traitement de vendange, et le positionnement d'un injecteur en ligne de CO₂ liquide dans cette canalisation ; injecteur conforme à l'invention, au niveau de la canalisation reliant l'étape de récolte au pressoir ;
- la Figure 2 est une vue en coupe, d'un injecteur conforme à l'invention ;
- la Figure 3 est une vue en coupe, selon un plan perpendiculaire de ce même injecteur ;
- la Figure 4 permet de visualiser en zoom la zone de connexion d'un injecteur conforme à l'invention sur la canalisation de transport du produit à traiter.

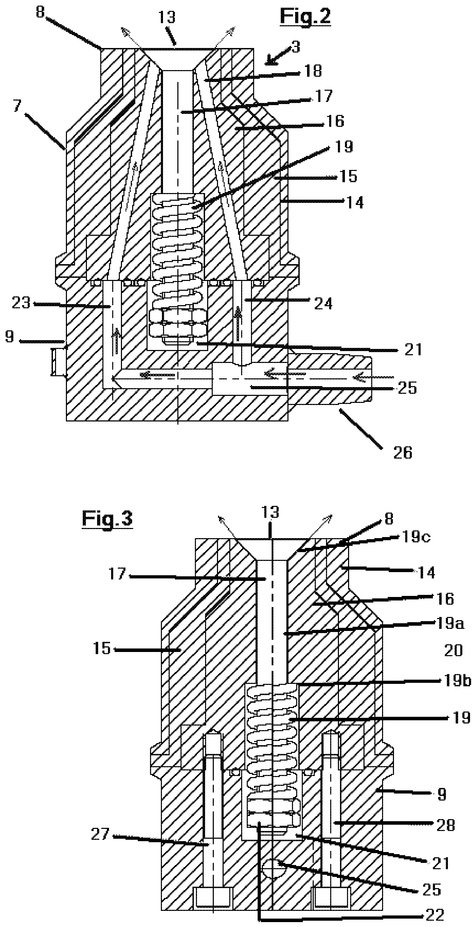

Comme cela est plus visible sur les Figures 2 et 3, le dispositif d'injection 3 comprend un corps composé de deux parties rendues solidaires, la partie inférieure 9 et la partie supérieure 7. La partie supérieure est elle même constituée de 3 éléments, une paroi sensiblement cylindrique 14 externe en acier inoxydable dont une extrémité vient indirectement en appui sur la partie inférieure 9 et dont l'autre extrémité est destinée à être fixée sur la paroi de l'enceinte.

A l'intérieur de cette paroi 14, est disposée une pièce de forme complémentaire, appelée pont thermique, également creuse, isolante, à l'intérieur de laquelle est disposée un troisième élément 16 en acier inoxydable traversé en son centre par la soupape 17 et par deux canaux 18 traversants débouchant sur la partie supérieure biseautée de la pièce 16 destinée à recevoir le siège 13 de la soupape 17.

L'ouverture traversante centrale de la pièce 16 comprend trois zones, une zone centrale 19a de diamètre sensiblement égale à celui de la soupape de telle sorte que la soupape peut être placée en coulissement dans cette zone et une zone inférieure 19b de diamètre supérieur, de telle sorte qu'elle puisse recevoir autour de l'axe de la soupape le ressort 19 forçant celle-ci. Ce ressort 19 étant maintenu par l'épaulement 20 formé entre les zones 19a et 19b.

A l'extrémité opposée supérieure, la zone 19c est de forme biseautée, de diamètre plus large en son extrémité libre, la forme du biseau étant adaptée pour recevoir de manière étanche le siège de la soupape lorsque la soupape est forcée par le ressort.

La partie inférieure 9 est quant à elle constituée d'un seul élément en acier inoxydable, de forme générale cylindrique. Cette pièce comporte un évidement aveugle central 21 qui lorsque le dispositif est monté coïncide avec l'ouverture 19b de la partie supérieure. Cet évidement est destiné à recevoir l'extrémité de la soupape maintenue par le ressort 19 et l'écrou de tarage 22 du ressort.

Elle comporte également de part et d'autre de l'évidement aveugle deux canaux verticaux 23, 24 qui en position de montage débouchent à une extrémité chacun sur un canal traversant 18 et l'autre extrémité dans un canal perpendiculaire 25 dont l'une des extrémités débouche sur le canal 23 et l'autre est destinée à être reliée au système d'alimentation en fluide cryogénique par l'intermédiaire du raccord 26.

La partie inférieure 9 est fixée à la pièce centrale 16 par des vis 27 et 28.

La vis 28 est une vis anti-démontage permettant le respect des normes de sécurité des dispositifs sous pression.

Les parties 14 et 15 sont rendues solidaires de la partie 9 par un raccord (non représenté), préférentiellement à démontage rapide, mais qui peut être aussi. Il pourrait être aussi du type vissé ou à baïonnette ou analogue.

En fonctionnement le fluide cryogénique est envoyé dans l'intérieur du dispositif 3, à travers le canal 25 puis chacun des canaux 18. Le fluide sous pression exerce alors une pression sur le siège de la soupape, un espace est alors formé entre la partie 19c et le siège de la soupape.

On observera que les opérations de démontage-remontage de l'ensemble d'injection 3 sont très faciles. Si on démonte le raccord 10, les différentes pièces constitutives se désolidarisent, ce qui permet de les inspecter, et les nettoyer.

L'injecteur est par exemple connecté sur la canalisation grâce à un raccord de type clamp, et par le fait que l'extrémité libre 8 est fixée, soudée sur une portion de la canalisation.

A titre d'exemple on réalise un raccordement d'un diamètre de type DN65 (76,1 mm).

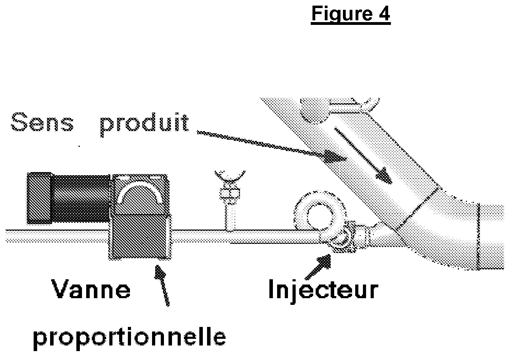

La figure 4 permet de visualiser en zoom la zone de connexion d'un injecteur conforme à l'invention sur la canalisation de transport du produit à traiter.

Avantageusement, le nombre de canaux traversants 18 est situé entre 2 et 8, et plus préférentiellement est au moins égal à 6.

Avantageusement, leur diamètre est situé dans la gamme allant de 2 à 6 mm.

Selon un des modes de réalisation de l'invention, l'injecteur comporte 6 canaux traversants, avantageusement d'un diamètre voisin de 5 mm.

A titre illustratif, on donne ci-dessous des exemples de conditions opératoires ayant données satisfaction pour le traitement de vendanges.
- un débit de CO₂ liquide injecté voisin de 6000 KgLCO₂/h, et pouvant selon les cas par exemple être situé dans la gamme : 500 à 8000 kg/h de LCO₂.
- la gamme de pression dans la canalisation va typiquement de 1 bar relatif à 5 bars (couramment à 1 bar).
   - une gamme de débit d'azote liquide entre 700 l/h et 6000 l/h pour une gamme de pression de 1 bar relatif à 5 bar peut typiquement être envisagée.

## Revendications

1. Un procédé de traitement en ligne, de milieux liquides ou pâteux ou semi-liquides ou encore comportant des éléments solides dans une base liquide, dans une canalisation transportant le milieu entre deux étapes d'une installation, par injection directe dans la canalisation d'un fluide cryogénique, **se caractérisant en ce que** l'on utilise pour réaliser l'injection dans la canalisation, un dispositif (3) d'injection comprenant un corps cylindrique creux dans lequel est inséré une soupape (17) forcée par un ressort (19), ledit dispositif d'injection comprenant au moins un canal traversant (18) sensiblement parallèle à ladite soupape destiné à être alimenté en fluide cryogénique sous pression, une extrémité dudit canal traversant étant reliée au système d'alimentation en fluide cryogénique et l'extrémité opposée débouchant au niveau du siège (13) de la soupape.

2. Procédé de traitement selon la revendication 1, **se caractérisant en ce que** le dispositif d'injection comprend n canaux traversant (18), n étant compris entre 2 et 8, lesdits canaux étant disposés symétriquement par rapport à l'axe longitudinal de la soupape (17).

3. Procédé de traitement selon la revendication 1 ou 2, **se caractérisant en ce que** le dispositif comprend un pont thermique (15), c'est-à-dire une pièce en matériau isolant, entre l'élément du dispositif d'injection en liaison directe avec l'arrivée de fluide cryogénique et l'élément du dispositif connecté sur la canalisation.

4. Procédé de traitement selon l'une quelconque des revendications 1 à 3, **se caractérisant en ce que** le dispositif comprend :
- un élément inférieur (9), qui en position de fonctionnement est le plus éloigné de la canalisation et qui est relié au système d'alimentation en fluide cryogénique,
- un élément central (16) dont l'extrémité inférieure est en appui sur l'élément inférieur,
- une soupape (17) placée en coulissement dans un trou traversant pratiqué axialement dans l'élément central, le siège (13) de la soupape étant en appui étanche contre la partie supérieure biseautée (19c) dudit trou traversant,
- un pont thermique (15) entourant l'élément central et dont l'extrémité inférieure est en appui sur l'élément inférieur,
- un élément de paroi (14) dont l'extrémité inférieure est en appui sur le bord inférieur du pont thermique et dont l'extrémité supérieure est destinée à être fixée sur la canalisation,
ledit élément inférieur comprenant :
- au moins un canal d'alimentation (25) dont une extrémité est en liaison avec le système d'alimentation en fluide cryogénique et l'autre extrémité est en liaison avec une extrémité d'un canal traversant (23) présent dans la pièce centrale (16), ledit canal traversant étant sensiblement parallèle à l'axe de la soupape, son autre extrémité débouchant au niveau du siège de la soupape,
- un évidement aveugle central (21) destiné à recevoir l'extrémité libre de l'axe de la soupape entouré d'un ressort de tarage (19),
ledit trou traversant de l'élément central présentant en son extrémité inférieure un diamètre supérieur de telle sorte qu'en position de montage, le ressort de tarage (19) soit maintenu contre ledit épaulement (20).

## Patentansprüche

1. Verfahren zum Inline-Verarbeiten von flüssigen oder pastenartigen oder halbflüssigen oder auch feste Elemente in einer flüssigen Basis enthaltenden Medien in einem Kanalnetz, das das Medium zwischen zwei Stufen einer Anlage führt, durch Direkteinspritzung eines kryogenen Fluides in das Kanalnetz, **dadurch gekennzeichnet, dass** zum Ausführen der Einspritzung in das Kanalnetz eine Einspritzvorrichtung (3) verwendet wird, die einen zylindrischen Hohlkörper umfasst, in den ein durch eine Feder (19) mit Kraft beaufschlagtes Ventil (17) eingefügt ist, wobei die Einspritzvorrichtung mindestens einen im Wesentlichen zu dem Ventil parallelen Durchgangskanal (18) umfasst, der dazu vorgesehen ist, mit unter Druck stehendem kryogenem Fluid gespeist zu werden, wobei ein Ende des Durchgangskanals mit dem System zum Speisen mit kryogenem Fluid verbunden ist und das gegenüberliegende Ende auf Höhe des Ventilsitzes (13) mündet.

2. Verarbeitungsverfahren nach Anspruch 1, **dadurch gekennzeichnet, dass** die Einspritzvorrichtung n Durchgangskanäle (18) umfasst, wobei n zwischen 2 und 8 liegt, wobei die Kanäle in Bezug auf die Längsachse des Ventils (17) symmetrisch angeordnet sind.

3. Verarbeitungsverfahren nach Anspruch 1 oder 2, **dadurch gekennzeichnet, dass** die Vorrichtung eine Wärmebrücke (15) umfasst, das heißt ein Teil aus isolierendem Material zwischen dem Element der Einspritzvorrichtung, das mit dem Zulauf von kryogenem Fluid in direkter Verbindung steht, und dem Element der Vorrichtung, das an das Kanalnetz angeschlossen ist.

4. Verarbeitungsverfahren nach einem der Ansprüche 1 bis 3, **dadurch gekennzeichnet, dass** die Vorrichtung umfasst:
- ein unteres Element (9), das in Arbeitsstellung am weitesten von dem Kanalnetz entfernt ist und das mit dem System zum Speisen mit kryogenem Fluid verbunden ist,
- ein zentrales Element (16), dessen unteres Ende an dem unteren Element anliegt,
- ein Ventil (17), das gleitend in einem axial in dem zentralen Element ausgeführten Durchgangsloch angeordnet ist, wobei der Ventilsitz (13) dicht an das obere abgeschrägte Teil (19c) des Durchgangslochs anliegt,
- eine Wärmebrücke (15), die das zentrale Element umgibt und deren unteres Ende an dem unteren Element anliegt,
- ein Wandelement (14), dessen unteres Ende an dem unteren Rand der Wärmebrücke anliegt und dessen oberes Ende dazu vorgesehen ist, an dem Kanalnetz befestigt zu werden,
wobei das untere Element umfasst:
- mindestens einen Speisekanal (25), von dem ein Ende mit dem System zum Speisen mit kryogenem Fluid in Verbindung steht und das andere Ende mit einem Ende eines Durchgangskanals (23), der in dem zentralen Teil (16) vorhanden ist, in Verbindung steht, wobei der Durchgangskanal im Wesentlichen zur Ventilachse parallel ist, wobei sein anderes Ende auf Höhe des Ventilsitzes mündet,
- eine zentrale Blindaussparung (21), die dazu vorgesehen ist, das freie Ende der Ventilachse, die von einer Regulierfeder (19) umgeben ist, aufzunehmen,
wobei das Durchgangsloch des zentralen Elements an seinem unteren Ende einen größeren Durchmesser aufweist, so dass die Regulierfeder (19) in Einbaustellung gegen die Schulter (20) gehalten wird.

## Claims

1. Method for the in-line processing of liquid or pasty or semi-liquid media, or media comprising solid elements in a liquid base, in a pipeline transporting the medium between two steps of an installation, by direct injection into the pipeline of a cryogenic fluid, **characterised in that** it is used to achieve the injection in the pipeline, an injection device (3) comprising a hollow cylindrical body wherein a valve (17) is inserted forced by a spring (19), said injection device comprising at least one extending duct (18) substantially parallel to the said valve intended to be supplied with pressurised cryogenic fluid, an end of the said extending duct being connected to the cryogenic fluid supply system and the opposite end leading to the base (13) of the valve.

2. Processing method according to claim 1, **characterised in that** the injection device comprises n extending ducts (18), n being between 2 and 8 inclusive, the said ducts being positioned symmetrically in relation to the longitudinal axis of the valve (17).

3. Processing method according to claim 1 or 2, **characterised in that** the device comprises a thermal bridge (15), in other words, a component made of insulating material, between the element of the injection device in direct contact with the arrival of the cryogenic fluid and the element of the device connected on the pipeline.

4. Processing method according to any one of the claims 1 to 3, **characterised in that** the device comprises:
- a lower element (9), which in a working position, is the farthest away from the pipeline and which is connected to the cryogenic fluid supply system,
- a central element (16), of which the lower end is supported on the lower element,
- a valve (17) placed sliding into an extending opening followed axially into the central element, the base (13) of the valve being supported watertight against the upper bevelled section (19c) of said extending opening,
- a thermal bridge (15) surrounding the central element and of which the lower end is supported on the lower element,
- a wall element (14) of which the lower end is supported on the lower edge of the thermal bridge and of which the upper end is intended to be fixed on the pipeline,
said lower element comprising:
- at least one supply duct (25) of which one end is in contact with the cryogenic fluid supply system and the other end is in contact with one end of an extending duct (23) present in the central component (16), the said extending duct being substantially parallel to the axis of the valve, its other end leading to the base of the valve,
- a clearly blind centre (21) intended to hold the free end of the axis of the valve surrounded by a setting spring (19),
said extending opening of the central element presenting on its lower end, a larger diameter, in such a way that in an assembly position, the setting spring (19) is held against the said recess (20).
